# EUROPÄISCHE PATENTANMELDUNG

(11) **EP 4 513 391 A1**
(43) Veröffentlichungstag der Anmeldung: **26.02.2025**
(21) Anmeldenummer: 23193466.2
(22) Anmeldetag: 25.08.2023
(51) Int. Cl.: G06N 20/00, G06F 9/50

(54) **COMPUTER-IMPLEMENTIERTES VERFAHREN UND SYSTEM ZUM BETRIEB EINES TECHNISCHEN GERÄTS**

(71) Anmelder: Siemens Aktiengesellschaft, 80333 München (DE)
(72) Erfinder: SCHALL, Daniel, 2020 Hollabrunn (AT)
(74) Vertreter: Siemens Patent Attorneys

(57) **Zusammenfassung**

Computer-implementiertes Verfahren zum Betrieb eines technischen Geräts durch einen Klienten mit einem Modell und folgende Schritte ausgeführt werden:
a. Ermitteln eines jeweiligen Leistungsparameters (PP1-PP3) für jeden Klienten (C1-C3),
b. Ermitteln des Mittelwerts (M) der Leistungsparameter (PP1-PP3), und Bestimmen einer ersten Klienten-Gruppe (G1), welche einen Leistungsparameter (PP1-PP3) in einer Höhe zumindest des Mittelwerts (M) aufweisen,
c. Ermitteln der Standardabweichung (SD) der Leistungsparameter (PP1-PP3), und Bestimmen einer zweiten Klienten-Gruppe (G2), deren Standardabweichung (SD) der Leistungsparameter (PP1-PP3) in einem vordefinierten Wertebereich liegt, und zusätzlich einen Leistungsparameter (PP1-PP3) in einer Höhe unter dem Mittelwert (M) aufweisen,
d. Ermitteln eines jeweiligen Qualitätsparameters (QP1-QP3), für zumindest jene Klienten, welche nicht der ersten und zweiten Klienten-Gruppe (G1, G2) zugeordnet sind, und Bestimmen einer dritten Klienten-Gruppe (G3), welche einen jeweiligen Qualitätsparameter (QP1-QP3) in einer Höhe zumindest eines vorbestimmten Schwellwerts aufweisen,
e. Erzeugen und Trainieren eines globalen Modells mit Modell-Parametern der jeweiligen lokalen Modelle von Klienten der ersten, der zweiten und der dritten Klienten-Gruppe (G1-G3) nach dem Prinzip föderierten Lernens, und Betreiben des technischen Geräts durch den verbundenen Klienten unter Verwendung des globalen Modells.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zum Betrieb eines technischen Geräts durch einen Klienten eines Klienten-Server-Systems mit einem Modell auf Basis künstlicher Intelligenz, wobei das Klienten-Server-System eine Menge an Klienten aufweist, und die Klienten jeweils ein lokales Modell zum Betrieb eines verbundenen technischen Geräts bereithalten.

Die Erfindung betrifft ferner ein Computer-Programm-Produkt.

Föderiertes Lernen beschreibt eine Technik im Bereich des maschinellen Lernens, bei der ein Modell auf mehreren Geräten trainiert wird. Jedes teilnehmende Gerät verfügt dabei über einen eigenen lokalen Datensatz, der nicht mit anderen Teilnehmern ausgetauscht wird. Im Gegensatz dazu gibt es beim herkömmlichen maschinellen Lernen einen zentralen Datensatz.

Durch diese Technik bauen mehrere Teilnehmer ein gemeinsames robustes Modell unter Berücksichtigung kritischer Probleme wie Datenschutz, Datensicherheit, Zugriffsrechte und Zugang zu heterogenen Daten auf. Die Technik wird in vielen Bereichen wie in der Verteidigung, der Telekommunikation, dem Internet der Dinge und dem Gesundheitswesen angewandt.

Mit anderen Worten ist "federated learning" (kurz FL) eine Technik des maschinellen Lernens (kurz ML), bei welcher ein Modell auf Basis künstlicher Intelligenz (kurz KI) über mehrere dezentrale Edge-Geräte eines Klienten-Server-Systems mit lokalen Datenproben trainiert wird, ohne das KI-Modell selbst auszutauschen.

Um eine gute Leistung eines endgültigen, zentralen ML-Modells zu gewährleisten, stützt sich FL auf einen iterativen Prozess, der in einen atomaren Satz von Klienten-Server-Interaktionen unterteilt ist, der als FL-Runde bezeichnet wird. Jede Runde dieses Prozesses besteht darin, den aktuellen globalen Modellstatus an teilnehmende Edge-Geräte zu übertragen, lokale Modelle auf diesen lokalen Edge-Geräten zu trainieren, um eine Reihe potenzieller Modellaktualisierungen auf jedem Edge-Gerät zu erzeugen, und diese lokalen Updates dann zu einem einzigen globalen Update zu aggregieren und zu verarbeiten und auf das globale Modell anzuwenden.

Im Stand der Technik wird oft von synchronisierten ModellAktualisierungen ausgegangen. In großen, verteilten Umgebungen können in der Regel Edge-Geräte mit unterschiedlichen Hardwarefunktionen an FL-Runden teilnehmen. Die Geschwindigkeit, mit der das verteilte FL-Training konvergiert, hängt vom langsamsten Klienten-Gerät ab. Daher könnte der gesamte Prozess verlangsamt werden, da ein einzelnes Gerät im Vergleich zu seinen Kollegen, die an einer FL-Schulung teilnehmen, möglicherweise über schlechte Hardwareressourcen verfügt. In der Praxis können FL-Trainings aufgrund langer Reaktionszeiten, Zeitüberschreitungen und der Blockade von Hardwareressourcen über einen langen Zeitraum fehlschlagen.

Im Stand der Technik wird in verteilten Trainings-Szenarien häufig von der Annahme ausgegangen, dass homogene Geräte verwendet werden, die über die gleichen Hardwarefähigkeiten verfügen. Dies gilt insbesondere für Cloud-basierte Rechenzentren.

Im Stand der Technik ist es bekannt, durch asynchrones föderiertes Lernen Klienten-Beiträge zu integrieren, sobald sie verfügbar sind.

Es ist daher Aufgabe der Erfindung eine Lösung für Systeme mit unterschiedlichen Hardware-Ressourcen bereitzustellen, welche ein effizientes Training eines ML-/KI-Modells zu erlaubt.

Die erfindungsgemäße Aufgabe wird durch ein System eingangs genannter Art gelöst, wobei folgende Schritte ausgeführt werden:
a. Ermitteln eines jeweiligen Leistungsparameters für jeden Klienten aus der Menge an Klienten, welcher die technische Leistungsfähigkeit des jeweiligen Klienten beschreibt,
b. Ermitteln des Mittelwerts der Leistungsparameter aller Klienten aus der Menge an Klienten, und Bestimmen einer ersten Klienten-Gruppe aus der Menge an Klienten, welche einen Leistungsparameter in einer Höhe zumindest des Mittelwerts der Leistungsparameter aufweisen,
c. Ermitteln der Standardabweichung der Leistungsparameter aller Klienten, und Bestimmen einer zweiten Klienten-Gruppe aus der Menge an Klienten, deren Standardabweichung der Leistungsparameter in einem vordefinierten Wertebereich liegt, und zusätzlich einen Leistungsparameter in einer Höhe unter dem Mittelwert der Leistungsparameter aufweisen,
d. Ermitteln eines jeweiligen Qualitätsparameters, welcher die technischen Parameter des jeweiligen Klienten zum Training des jeweiligen lokalen Modells beschreibt, für zumindest jene Klienten, welche nicht der ersten Klienten-Gruppe und nicht der zweiten Klienten-Gruppe zugeordnet sind, und Bestimmen einer dritten Klienten-Gruppe aus der Menge an Klienten, welche einen jeweiligen Qualitätsparameter in einer Höhe zumindest eines vorbestimmten Schwellwerts aufweisen,
e. Erzeugen und Trainieren eines globalen Modells mit Modell-Parametern der jeweiligen lokalen Modelle von Klienten der ersten, der zweiten und der dritten Klienten-Gruppe nach dem Prinzip föderierten Lernens, und Betreiben des technischen Geräts durch den verbundenen Klienten unter Verwendung des globalen Modells.

Dadurch wird erreicht, dass auf vorteilhafte Weise Edge-Vorrichtungen ausgewählt werden können, welche eine Trainings-Gruppe bilden, mit welchen ein effizientes Training sichergestellte ist.

In einer Weiterbildung der Erfindung ist es vorgesehen, dass der jeweilige Leistungsparameter des jeweiligen Klienten die Anzahl und Art der Prozessoren und/oder die Größe des Arbeitsspeichers und/oder die Größe des Festplattenspeichers und/oder die Übertragungseigenschaften der Datenverbindung zwischen dem jeweiligen Klienten und dem Server beschreibt.

Dadurch kann auf einfache Weise ein statischer Leistungsparameter für einen Klienten bestimmt werden, welcher die technische Leistungsfähigkeit des Klienten geeignet repräsentiert.

In einer Weiterbildung der Erfindung ist es vorgesehen, dass das Ermitteln des jeweiligen Leistungsparameters des jeweiligen Klienten eine aktuelle Auslastung der technischen Ressourcen des jeweiligen Klienten berücksichtigt.

Dadurch kann auf einfache Weise ein dynamischer Leistungsparameter für einen Klienten bestimmt werden, welcher die technische Leistungsfähigkeit des Klienten geeignet repräsentiert In einer Weiterbildung der Erfindung ist es vorgesehen, dass der jeweilige Qualitätsparameter des jeweiligen Klienten die Größe und/oder die Varianz und/oder die Anzahl der Kennzeichnungen der Daten des jeweiligen lokalen Modells beschreibt. Dadurch kann auf einfache Weise ein Qualitätsparameter für ein ML-/KI-Modell eines Klienten bestimmt werden, welcher die technische Komplexität des lokalen Modells des Klienten geeignet repräsentiert.

In einer Weiterbildung der Erfindung ist es vorgesehen, dass das Ermitteln des jeweiligen Qualitätsparameters im Schritt d) für alle Klienten erfolgt, und zumindest zwei Klienten, ausgewählt aus der ersten Klienten-Gruppe und/oder der zweiten Klienten-Gruppe und/oder der dritten Klienten-Gruppe, durch einen Klienten ohne eine Gruppenzuordnung ersetzt wird, wenn die Qualitätsparameter der ausgewählten zumindest zwei Klienten gemeinsam zumindest dem Qualitätsparameter des Klienten ohne Gruppenzuordnung entsprechen.

Die Qualitätsparameter der ausgewählten zumindest zwei Klienten können beispielsweise addiert werden.

Dadurch kann auf einfache Weise ein Klient mit niedriger Leistungsfähigkeit oder hoher Komplexität im lokalen Modell im System bei der Bestimmung eines globalen Modells nach dem föderierten Ansatz berücksichtigt werden.

In einer Weiterbildung der Erfindung ist es vorgesehen, dass der vordefinierte Wertebereich bei der einfachen Standardabweichung vom beziehungsweise um den Mittelwert liegt.

Dadurch kann auf einfache Weise ein vorteilhaftes Kriterium zur Gruppenzuordnung von Klienten geschaffen werden, welches die ineffizienten Klienten beim föderierten Lernen identifiziert und ausschließt.

Die erfindungsgemäße Aufgabe wird auch durch ein System zum Betrieb eines technischen Geräts durch einen Klienten eines Klienten-Server-Systems mit einem Modell auf Basis künstlicher Intelligenz gelöst, wobei das Klienten-Server-System eine Menge an Klienten mit jeweils einem Prozessor und jeweils einem Speicher aufweist, wobei die Klienten dazu eingerichtet sind, jeweils ein lokales Modell zum Betrieb eines verbundenen technischen Geräts bereitzuhalten, und das System ferner dazu eingerichtet ist, das erfindungsgemäße Verfahren auszuführen.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Ausführungsbeispiel für eine Klienten-Server-Systemarchitektur,
- Fig. 2: ein Ausführungsbeispiel für das erfindungsgemäße Verfahren,
- Fig. 3-4: eine statistische Darstellung der Reaktionszeiten von Klienten.

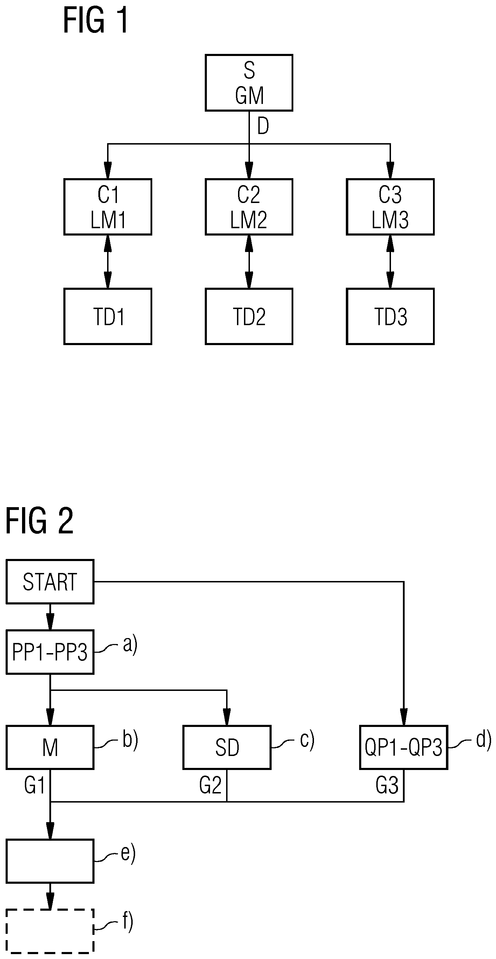

**Fig. 1** stellt ein Ausführungsbeispiel für eine Klienten-Server-Systemarchitektur dar.

Das System dient zum Betrieb eines technischen Geräts TD1 durch einen Klienten C1 des Klienten-Server-Systems.

Der Betrieb erfolgt mit einem Modell LM1 auf Basis künstlicher Intelligenz.

Das Klienten-Server-System weist eine Menge an Klienten C1-C3 mit jeweils einem Prozessor und jeweils einem Speicher auf.

Die Klienten C1-C3 sind dazu eingerichtet, jeweils ein lokales Modell LM1-LM3 zum Betrieb eines verbundenen technischen Geräts TD1-TD3 bereitzuhalten.

Das System ist ferner dazu eingerichtet, das im Weiteren näher beschriebene Verfahren auszuführen.

**Fig. 2** zeigt ein vereinfachtes Ausführungsbeispiel für das erfindungsgemäße Verfahren, welches am System nach der vorhergehenden Figur ausgeführt werden kann.

Folgende Schritte werden ausgeführt:
a. Ermitteln eines jeweiligen Leistungsparameters PP1-PP3 für jeden Klienten C1-C3 aus der Menge an Klienten, welcher die technische Leistungsfähigkeit des jeweiligen Klienten C1-C3 beschreibt,
b. Ermitteln des Mittelwerts M der Leistungsparameter PP1-PP3 aller Klienten C1-C3 aus der Menge an Klienten, und Bestimmen einer ersten Klienten-Gruppe G1 aus der Menge an Klienten, welche einen Leistungsparameter PP1-PP3 in einer Höhe zumindest des Mittelwerts M der Leistungsparameter aufweisen,
c. Ermitteln der Standardabweichung SD der Leistungsparameter PP1-PP3 aller Klienten, und Bestimmen einer zweiten Klienten-Gruppe G2 aus der Menge an Klienten, deren Standardabweichung SD der Leistungsparameter in einem vordefinierten Wertebereich PR liegt, und zusätzlich einen Leistungsparameter PP1-PP3 in einer Höhe unter dem Mittelwert M der Leistungsparameter PP1-PP3 aufweisen,
d. Ermitteln eines jeweiligen Qualitätsparameters QP1-QP3, welcher die technischen Parameter des jeweiligen Klienten C1-C3 zum Training des jeweiligen lokalen Modells LM1-LM3 beschreibt, für zumindest jene Klienten, welche nicht der ersten Klienten-Gruppe G1 und nicht der zweiten Klienten-Gruppe G2 zugeordnet sind, und Bestimmen einer dritten Klienten-Gruppe G3 aus der Menge an Klienten, welche einen jeweiligen Qualitätsparameter QP1-QP3 in einer Höhe zumindest eines vorbestimmten Schwellwerts aufweisen,
e. Erzeugen und Trainieren eines globalen Modells GM mit Modell-Parametern der jeweiligen lokalen Modelle LM1-LM3 von Klienten C1-C3 der ersten, der zweiten und der dritten Klienten-Gruppe G1-G3 nach dem Prinzip föderierten Lernens, und Betreiben des technischen Geräts TD1 durch den verbundenen Klienten C1 unter Verwendung des globalen Modells GM.

Mit anderen Worten werden nur leistungsfähige Klienten und Klienten mit einen hinreichenden Datenqualität beim föderierten Lernen berücksichtigt.

Dadurch wird erreicht, dass die Leistungsfähigkeit des Systems erhalten bleibt, indem nur günstige Klienten bei der Modellbildung des globalen Modells GM berücksichtigt werden.

Die Leistungsparameter PP1-PP3 sowie die Qualitätsparameter QP1-QP3 können beispielsweise in einem Bereich von 1.0 bis 9.9 liegen, wobei 1.0 der niedrigste Wert und 9.9 der höchstmögliche Wert ist, und ein niedriger Wert für eine niedrige Leistung beziehungsweise eine niedrige Qualität steht, und ein hoher Wert für eine hohe Leistung beziehungsweise eine hohe Qualität steht.

Mit anderen Worten ist der jeweilige Leistungsparameter PP1-PP3 direkt proportional mit der technischen Leistungsfähigkeit des jeweiligen Klienten.

Die Leistungsparameter PP1-PP3 werden durch jene Komponente des jeweiligen Klienten bestimmt, welche die niedrigste Leistungsfähigkeit aufweist, wie Prozessor, Speicher etc.

Der jeweilige Leistungsparameter PP1-PP3 des jeweiligen Klienten C1-C3 beschreibt vorzugsweise die Anzahl und Art der Prozessoren und/oder die Größe des Arbeitsspeichers und/oder die Größe des Festplattenspeichers und/oder die Übertragungseigenschaften der Datenverbindung D zwischen dem jeweiligen Klienten C1-C3 und dem Server S.

Dadurch werden die statischen Eigenschaften von Klienten berücksichtigt, wie Rechenfähigkeiten, Speicherfähigkeiten oder Kommunikationsfähigkeiten.

Das Ermitteln des jeweiligen Leistungsparameters PP1-PP3 des jeweiligen Klienten C1-C3 berücksichtigt dabei vorzugsweise ferner eine aktuelle Auslastung der technischen Ressourcen des jeweiligen Klienten C1-C3.

Dadurch werden dynamische Eigenschaften von Klienten berücksichtigt, also eine aktuelle Auslastung des Prozessors oder des Speichers. Somit kann die Verfügbarkeit der Ressourcen berücksichtigt werden.

Der jeweilige Qualitätsparameter QP1-QP3 des jeweiligen Klienten C1-C3 beschreibt die Größe und/oder die Varianz und/oder die Anzahl der Kennzeichnungen der Daten des jeweiligen lokalen Modells LM1-LM3.

Das Ermitteln des jeweiligen Qualitätsparameters QP1-QP3 im Schritt d) erfolgt optional - als Schritt f) gezeigt - für alle Klienten C1-C3.

Dabei werden zumindest zwei Klienten, ausgewählt aus der ersten Klienten-Gruppe G1 und/oder der zweiten Klienten-Gruppe G2 und/oder der dritten Klienten-Gruppe G3, durch einen Klienten ohne eine Gruppenzuordnung ersetzt, wenn die Qualitätsparameter der ausgewählten zumindest zwei Klienten gemeinsam zumindest dem Qualitätsparameter des Klienten ohne Gruppenzuordnung entsprechen.

Mit anderen Worten kann ein Klient mit niedriger Leistungsfähigkeit oder niedriger Daten-Qualität im jeweiligen lokalen Modell dennoch im föderierten Lernen berücksichtigt werden, wenn auf günstige Klienten, welche die Leitungs- und Qualitätserfordernisse erfüllen, dafür nicht im globalen Modell berücksichtigt werden.

Dies kann insbesondere dann vorteilhaft sein, wenn der Klient mit niedriger Leistungsfähigkeit oder niedriger Daten-Qualität dennoch besonders relevante Daten umfasst und deshalb berücksichtigt werden soll.

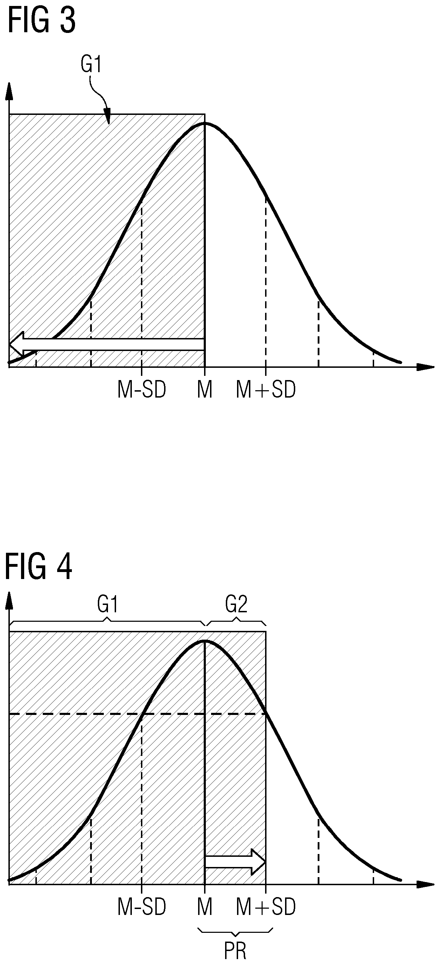

**Fig. 3** zeigt eine Darstellung der Reaktionszeit von Klienten und Kriterien zur Zuordnung in die erste Klienten-Gruppe.

In der Figur ist die statistische Verteilung von Reaktionszeiten der Klienten C1-C3 dargestellt.

Klienten mit schlechten, also langen Reaktionszeiten weisen einen schlechten Leistungsparameter auf.

Es ist die Standardabweichung SD der Leistungsparameter PP1-PP3 aller Klienten C1-C3 aus der Menge an Klienten um den Mittelwert M der Leistungsparameter PP1-PP3 gezeigt.

Es wird die erste Klienten-Gruppe G1 aus der Menge an Klienten bestimmt, indem nur jene Klienten der Gruppe zugewiesen werden, welche einen Leistungsparameter PP1-PP3 in einer Höhe zumindest des Mittelwerts M der Leistungsparameter aufweisen.

**Fig. 4** zeigt eine Weiterentwicklung der vorhergehenden Figur mit einer Darstellung der Reaktionszeit von Klienten und Kriterien zur Zuordnung in die zweite Klienten-Gruppe.

Es wird die zweite Klienten-Gruppe G2 aus der Menge an Klienten bestimmt, indem nur jene Klienten der Gruppe zugewiesen werden, welche als Standardabweichung SD der Leistungsparameter PP1-PP3 zumindest einen Wert von Eins aufweisen, und zusätzlich einen Leistungsparameter PP1-PP3 in einer Höhe unter dem Mittelwert M der Leistungsparameter PP1-PP3 aufweisen.

Es wird davon ausgegangen, dass eine einfache Standardabweichung SD vom Mittelwert M für die Klienten C1-C3 noch akzeptabel ist.

Daher liegt der vordefinierte Wertebereich PR bei der einfachen Standardabweichung SD vom Mittelwert M.

### Bezugszeichenliste:

- C1-C3: Klienten
- D: Datenverbindung
- G1-G3: Klienten-Gruppe
- GM: globales Modell
- LM1-LM3: lokales Modell
- M: Mittelwert
- PP1-PP3: Leistungsparameter (engl. "performance parameter")
- PR: vorbestimmter Wertebereich (engl. "predefined range")
- QP1-QP3: Qualitätsparameter (engl. "quality parameter")
- S: Server
- SD: Standardabweichung
- TD1-TD3: technisches Gerät

## Patentansprüche

1. Computer-implementiertes Verfahren zum Betrieb eines technischen Geräts (TD1) durch einen Klienten (C1) eines Klienten-Server-Systems mit einem Modell (LM1) auf Basis künstlicher Intelligenz, wobei das Klienten-Server-System eine Menge an Klienten (C1-C3) aufweist, und die Klienten (C1-C3) jeweils ein lokales Modell (LM1-LM3) zum Betrieb eines verbundenen technischen Geräts (TD1-TD3) bereithalten, und folgende Schritte ausgeführt werden:
a. Ermitteln eines jeweiligen Leistungsparameters (PP1-PP3) für jeden Klienten (C1-C3) aus der Menge an Klienten, welcher die technische Leistungsfähigkeit des jeweiligen Klienten (C1-C3) beschreibt,
b. Ermitteln des Mittelwerts (M) der Leistungsparameter (PP1-PP3) aller Klienten (C1-C3) aus der Menge an Klienten, und Bestimmen einer ersten Klienten-Gruppe (G1) aus der Menge an Klienten, welche einen Leistungsparameter (PP1-PP3) in einer Höhe zumindest des Mittelwerts (M) der Leistungsparameter aufweisen,
c. Ermitteln der Standardabweichung (SD) der Leistungsparameter (PP1-PP3) aller Klienten, und Bestimmen einer zweiten Klienten-Gruppe (G2) aus der Menge an Klienten, deren Standardabweichung (SD) der Leistungsparameter (PP1-PP3) in einem vordefinierten Wertebereich (PR) liegt, und zusätzlich einen Leistungsparameter (PP1-PP3) in einer Höhe unter dem Mittelwert (M) der Leistungsparameter (PP1-PP3) aufweisen,
d. Ermitteln eines jeweiligen Qualitätsparameters (QP1-QP3), welcher die technischen Parameter des jeweiligen Klienten (C1-C3) zum Training des jeweiligen lokalen Modells (LM1-LM3) beschreibt, für zumindest jene Klienten, welche nicht der ersten Klienten-Gruppe (G1) und nicht der zweiten Klienten-Gruppe (G2) zugeordnet sind, und Bestimmen einer dritten Klienten-Gruppe (G3) aus der Menge an Klienten, welche einen jeweiligen Qualitätsparameter (QP1-QP3) in einer Höhe zumindest eines vorbestimmten Schwellwerts aufweisen,
e. Erzeugen und Trainieren eines globalen Modells (GM) mit Modell-Parametern der jeweiligen lokalen Modelle (LM1-LM3) von Klienten (C1-C3) der ersten, der zweiten und der dritten Klienten-Gruppe (G1-G3) nach dem Prinzip föderierten Lernens, und Betreiben des technischen Geräts (TD1) durch den verbundenen Klienten (C1) unter Verwendung des globalen Modells (GM).

2. Verfahren nach dem vorhergehenden Anspruch, wobei der jeweilige Leistungsparameter (PP1-PP3) des jeweiligen Klienten (C1-C3) die Anzahl und Art der Prozessoren und/oder die Größe des Arbeitsspeichers und/oder die Größe des Festplattenspeichers und/oder die Übertragungseigenschaften der Datenverbindung (D) zwischen dem jeweiligen Klienten (C1-C3) und dem Server (S) beschreibt.

3. Verfahren nach einem der vorhergehenden Ansprüche, wobei das Ermitteln des jeweiligen Leistungsparameters (PP1-PP3) des jeweiligen Klienten (C1-C3) eine aktuelle Auslastung der technischen Ressourcen des jeweiligen Klienten (C1-C3) berücksichtigt.

4. Verfahren nach einem der vorhergehenden Ansprüche, wobei der jeweilige Qualitätsparameter (QP1-QP3) des jeweiligen Klienten (C1-C3) die Größe und/oder die Varianz und/oder die Anzahl der Kennzeichnungen der Daten des jeweiligen lokalen Modells (LM1-LM3) beschreibt.

5. Verfahren nach einem der vorhergehenden Ansprüche, wobei das Ermitteln des jeweiligen Qualitätsparameters (QP1-QP3) im Schritt d) für alle Klienten (C1-C3) erfolgt, und zumindest zwei Klienten, ausgewählt aus der ersten Klienten-Gruppe (G1) und/oder der zweiten Klienten-Gruppe (G2) und/oder der dritten Klienten-Gruppe (G3), durch einen Klienten ohne eine Gruppenzuordnung ersetzt wird, wenn die Qualitätsparameter der ausgewählten zumindest zwei Klienten gemeinsam zumindest dem Qualitätsparameter des Klienten ohne Gruppenzuordnung entsprechen.

6. Verfahren nach einem der vorhergehenden Ansprüche, wobei der vordefinierte Wertebereich (PR) bei der einfachen Standardabweichung (SD) vom Mittelwert (M) liegt.

7. System zum Betrieb eines technischen Geräts (TD1) durch einen Klienten (C1) eines Klienten-Server-Systems mit einem Modell (LM1) auf Basis künstlicher Intelligenz, wobei das Klienten-Server-System eine Menge an Klienten (C1-C3) mit jeweils einem Prozessor und jeweils einem Speicher aufweist, wobei die Klienten (C1-C3) dazu eingerichtet sind, jeweils ein lokales Modell (LM1-LM3) zum Betrieb eines verbundenen technischen Geräts (TD1-TD3) bereitzuhalten, und das System ferner dazu eingerichtet ist, das Verfahren nach einem der vorhergehenden Ansprüche auszuführen.

8. Computer-Programm-Produkt mit darin gespeicherten maschinenlesbaren Anweisungen, die, wenn sie von einer Verarbeitungseinheit ausgeführt werden, diese veranlassen, das Verfahren nach einem der vorhergehenden Ansprüche auszuführen.
